# EUROPEAN PATENT APPLICATION

(11) **EP 4 647 146 A1**
(43) Date of publication of application: **12.11.2025**
(21) Application number: 24174466.3
(22) Date of filing: 07.05.2024
(51) Int. Cl.: B01D 53/26, B01D 53/30, B60T 17/00

(54) **AIR DRYER SYSTEM FOR A COMPRESSOR AND METHOD**

(71) Applicant: KB Intellectual Property GmbH & Co. KG, 82049 Pullach (DE)
(72) Inventor: Szigetvari, Mate, 1115 Budapest (HU); Kiss, Robert, 1116 Budapest (HU)

(57) **Abstract**

The present invention relates to an air dryer system (1) for a compressor (40), comprising:
at least one air dryer (10) having at least one air dryer inlet (10a) configured to receive air compressed by the compressor (40) via an air dryer inlet line (11) and at least one air dryer outlet (10b) configured to discharge air from the air dryer (10) via an air dryer inlet line (11),
at least one temperature detection device (30) positioned at the at least one air dryer inlet (10a) to detect a temperature at the air dryer inlet (10a), and
a control unit (20) operationally connected to the at least one air dryer (10) and the at least one temperature detection device (30) and configured to control the at least one air dryer (10) to be turned on or off within a predetermined activation or deactivation time at least in accordance with a temperature and/or temperature profile detected by the at least one temperature detection device (30).

## Description

The present invention relates to an air dryer system for a compressor, a compressor system comprising such air dryer system, a respective rail vehicle, and a method for operating the such air dryer system, a respective computer program product and computer-readable medium.

In compressor systems comprising an air dryer arranged downstream of a compressor in order to dehumidify the compressed air generated by the compressor, operation of the air dryer is dependent on the operating state of the compressor. In concrete, the air dryer shall be activated with the compressor being in operation. Accordingly, a respective signal indicating the operation of the compressor is required to trigger the control of the air dryer. For example, in rail vehicle applications, the signal used for this purpose is a compressor-on-signal generated by a relay. The K-signal is a feedback signal indicating that the compressor is running. However, the K-signal is not sufficiently reliable and may conflict other constraints.

It is an object of the present invention to provide an improved air dryer system.

The object is solved by the subject matter of the independent claims. Further aspects of the present invention are subject to the dependent claims.

According to the present invention, an air dryer system for a compressor comprises at least one air dryer having at least one air dryer inlet configured to receive air compressed by the compressor via an air dryer inlet line and at least one air dryer outlet configured to discharge air from the air dryer via an air dryer inlet line, and at least one temperature detection device positioned at the at least one air dryer inlet to detect a temperature at the air dryer inlet. The air dryer system further comprises a control unit operationally connected to the at least one air dryer and the at least one temperature detection device and configured to control the at least one air dryer to be turned on or off within a predetermined activation or deactivation time at least in accordance with a temperature and/or temperature profile detected by the at least one temperature detection device.

The term "operationally connected" with respect to control unit refers to a direct or indirect connection between the control unit and the at least one air dryer to control the air dryer and a direct or indirect connection between the control unit and the at least one temperature detection device to receive signal representing the detected temperature. A respective connection may be implemented by signal lines and/or wirelessly.

Further, the term "at least in accordance" refers to the control of turning on and off the air dryer by the control unit may also comprise other control modes and/or trigger events.

In principle, the present invention is based on allowing to control the at least one air dryer by detecting a temperature and/or temperature profile at the at least one air dryer inlet representative of a specific operational state of the air dryer and/or a specific boundary condition requiring a particular operational state of the air dryer. For example, turning on the air dryer results in a specific temperature profile pattern detectable by the temperature detection device. Accordingly, the control unit becomes aware of the air dryer being in an active state and can control the air dryer to be turned off, if there is any indication of the compressor not being running and/or the air dryer shall not be operated for other reasons.

In some embodiments, the control unit is configured to control the air dryer to be turned on or off within the predetermined activation or deactivation time, when the temperature and/or temperature profile detected by the at least one temperature detection device indicates a deactivation and/or activation of the compressor.

The term "within a predetermined activation or deactivation time" refers to the air dryer being turned on or off an immediately or with predetermined delay. For example, even though the air dryer should be operated while the compressor is running, it may not be required to turn on the air dryer during the starting period of the compressor but after a predetermined delay associated with the compressor reaching the target operational state. Similarly, when the compressor is turned off, it may be advantageous to further operate the air dryer for a predetermined time before the air dryer is turned off. Further the predetermined activation and/or deactivation time may be set to avoid unnecessary switching procedures. For example, in the event of the compressor is turned off and turned on again within a short period of time.

Turning the compressor on or off provides a specific characteristic recognizable in the course of detecting the temperature at the air dryer inlet. Accordingly, the air dryer system may be controlled to only run in parallel, eventually considering the respective predetermined delays, with the compressor without the requirement of a relay and a respective K-signal to be generated. In other words, the air dryer system provides the ability to be self-controlled based on detected temperatures at the air dryer inlet. This does not only apply for controlling the air dryer in accordance with the operational state of the compressor but also for the operational state of the air dryer as such, which may be representative of a piston valve switching state of the air dryer.

In some embodiments, the control unit is configured to control the air dryer to be turned off within the predetermined deactivation time, when the temperature detected by the at least one temperature detection device decreases from a substantially constant level over a predetermined drop time and/or from a reference temperature over a predetermined drop time and/or below a predetermined temperature threshold.

For example, as an exemplary reference, turning on the air dryer during operation of the compressor results in a specific temperature profile pattern detectable by the temperature detection device. Such temperature profile pattern shows a sharp drop in temperature from a substantially constant temperature. The decrease in temperature is reaching a minimum temperature, and subsequently the temperature increases degressively to reach a temperature above the initial substantially constant temperature before the temperature drops again on the initial substantially constant temperature. With respect to a deactivation of the compressor requiring the air dryer to be turned off within the predetermined deactivation time, turning off the compressor shows different temperature profile patterns. The temperature profile patterns in response to turning off the compressor may be detectable by a decrease in temperature from a substantially constant level over a predetermined drop time different from the drop time associated with the air dryer being turned on as previously described. In particular, the drop time indicating the compressor being turned off is longer than the drop time indicating the air dryer being switched off. Alternatively or in addition, the air dryer may be controlled to be turned off, when a temperature decreases with a negative slope different from a negative slope of the first temperature drop with respect to turning on the air dryer is detected.

Alternatively of or in addition to the control requiring the detection of a substantially constant temperature a reference temperature may be set as reference for a temperature drop. The reference temperature may be set to represent the substantially constant temperature expected in a concrete configuration of a respective compressor system, a respective operational mode of the compressor system and/or specific boundary conditions. The reference temperature may be adaptable, e.g. in accordance with an operational mode of the compressor system. Further, the reference temperature may not necessarily correspond to the substantially constant temperature but may be set differently, particularly not restricted to a concrete temperature but a temperature range. Using the reference temperature for controlling turning off the air dryer particularly allows detecting the deactivation of the compressor in a state, in which the temperature associated with the turning on of the air dryer has not returned to the substantially constant temperature. Such situation may occur, if the compressor is turned off while the air dryer is energized but not dominant. The dominant state of the air dryer is associated with the temperature in the specific temperature profile pattern representing the air dryer being turned on returning to the substantially constant temperature. The reference temperature may also be representative of a temperature being detected as substantially constant, i.e. constant or at least within a predetermined temperature range. Accordingly, the reference temperature may not be predetermined as a set value or value range but as any temperature substantially constant over at least a predetermined period of time. For example, the reference temperature may thereby be autonomously adaptable in response of different ambient temperatures.

Specifically with respect to the compressor being turned off in a state where the air dryer is energized but not dominant as described above, the temperature decreases below the minimum temperature associated with the specific temperature profile pattern of the air dryer being turned on. Accordingly, alternatively or in addition to determining the temperature drop with respect to the predetermined drop time and/or slope, the compressor being turned off may be detected in such event by the detected temperature falling below a predetermined temperature threshold. The temperature threshold can be set as the minimum temperature of the specific temperature profile pattern associated with the air dryer being turned on to be expected under given circumstances such as the operational mode of the compressor system and the like. Alternatively, the temperature threshold may be set lower than said minimum temperature for the avoidance of slight deviations in in the actual temperature profile pattern caused by turning on the air dryer being misinterpreted as the compressor being turned off.

Even though the above example refers to the control of turning off the air dryer in response to the detection of a temperature characteristic indicating turning off of the compressor, the same principles may apply for other trigger events to turn off the air dryer. For example, a respective temperature drop different from the initial temperature drop associated with the air dryer being turned off may occur due to failure or other boundary conditions.

In some embodiments, the control unit is configured to control the air dryer to be turned on within the predetermined activation time, when the temperature detected by the at least one temperature detection device shows a temperature increase after the temperature detected by the at least one temperature detection device has decreased from a substantially constant level over a predetermined drop time and/or from a reference temperature over a predetermined drop time and/or below a predetermined temperature threshold.

For example, similar to the above, turning on the compressor after being turned off also provides characteristic temperature profile patterns. Particularly, turning on the compressor after being turned off is detectable by the increase in temperature after a respective decrease associated with the compressor being turned off as previously described. However, it has to be noted that an increase in temperature after a decrease due to the compressor being turned off in a state where the air dryer is energized but not dominant. Such increase is not necessarily caused by the compressor being turned on again. If such increase is below a predetermined positive slope, the increase is not associated with the compressor turned on. In turn, if the positive slope in temperature exceeds the predetermined positive slope, the increase in temperature is associated with the compressor being turned on and the air dryer is controlled to be turned on accordingly. Specifically, if an increase in temperature after a respective decrease is detected to provide different sections, for example, represented by different slope functions, the section following the decrease is associated with a decrease not caused by the compressor being turned on while the subsequent section is associated with the compressor being turned on. The time of turning on the compressor is associated with the start of the subsequent section. As another approach for identifying an increase of the temperature is due to turning on of the compressor after the compressor has been turned off is to identify whether the respective increase exceeds the substantially constant temperature and/or the reference temperature.

In some embodiments, the control unit is configured to control the air dryer to be turned off within the predetermined deactivation time, when a shape of an actual temperature profile pattern different from a substantially constant temperature deviates from a shape of a reference temperature profile pattern different from a substantially constant temperature.

The deviation in the shape of an actual temperature profile pattern different from the shape of a reference profile pattern allows indication of the compressor being turned off. A difference in the shape of an actual temperature profile pattern with respect the shape of a reference profile pattern may include at least one of a slope, a turning point and a shape of the slope, e.g. being degressive or the like. By comparing the shape of the actual temperature profile pattern with the refence temperature profile pattern, the control may be less prone to turn the air dryer off and on in response to short temperature fluctuations. However, monitoring temperature values with respect to the temperature threshold may allow immediate reaction.

Similar to turning off the air dryer in response to deviation in the actual temperature profile from the reference temperature profile pattern, the air dryer may be turned on within the predetermined activation time when a deviation indicates that the compressor has been turned on. Such deviation may be part of an overall actual temperature profile pattern or a separate temperature profile pattern. For example, when the compressor is turned off during the air dryer being energized but not dominant, the actual temperature profile pattern detected at the air dryer inlet provides a decrease in temperature and a subsequent degressive increase before a sharp increase in the temperature indicates turning on of the compressor. Accordingly, turning off and on of the compressor is detectable within one actual temperature profile pattern.

In view of the above, it is noted that any deviation of the temperature resulting in a temperature profile pattern may be allowed to be associated with different operating states of the compressor and/or the air dryer. For example, a deviation from a constant temperature shows a typical temperature profile pattern different from the temperature profile pattern detectable when the compressor is turned off or on. Accordingly, by setting the temperature profile pattern of the air dryer being turned on as the reference temperature profile pattern allows detection of the compressor being turned off or on to appropriately control the air dryer to be turned off or an.

In some embodiments, the control unit comprises a memory, in which at least one of the predetermined activation time, the predetermined deactivation time, the predetermined drop time, the reference temperature and the predetermined temperature threshold is stored.

Accordingly, the memory of control unit comprises concrete values and/or shapes of reference temperature profile pattern to be compared with actual temperatures and/or temperature profile patterns to control the air dryer accordingly. The memory may provide different values and/or reference temperature profile patterns with respect to different operating parameters of the compressor. The control unit may be configured to adapt the control, e.g. by referring to different values and/or reference temperature profile patterns, depending on the different operating parameters of the compressor. Particularly, the control unit may adapt the control of the air dryer to refer to the predetermined temperature threshold during a first set of operating parameters of the compressor, while during a second set of operating parameters of the compressor, the control unit controls the air dryer based on reference temperature profile patterns. The control may also be adapted to provide different predetermined deactivation and/or activation times with respect to different operating parameters of the compressor. The adaption of controlling the air dryer may not be restricted to operating parameters of the compressor but may, alternatively or in addition, depend on other boundary conditions, like weather conditions, and/or external trigger events, e.g. a signal received by an external device. With respect to an external device, such external device may also allow to provide control values and/or reference temperature profile patterns instead of or in addition to the memory of the control unit.

In another aspect, the present invention relates to a compressor system, comprising at least one compressor, and at least one air dryer system as previously described.

Any feature previously described with respect to the air dryer system is to the compressor system. Vice versa, any further description of the compressor system affecting the air dryer system is also applicable to the air dryer system.

In another aspect, the present invention relates to a rail vehicle, comprising at least one compressor system as previously described.

Accordingly, any feature of the compressor system and the air dryer system, respectively is applicable to the vehicle, and vice versa.

In another aspect, the present invention relates to a method for operating an air dryer system as previously described. The method comprises detecting a temperature at the at least one air dryer inlet, and controlling the at least one air dryer to be turned on or off within a predetermined activation or deactivation time at least in accordance with the temperature and/or a respective temperature profile detected.

Further embodiments of the method comply with the different embodiments and respective functionalities of the air dryer system previously described. Vice versa, any method feature may constitute a respective feature of the air dryer system and/or the compressor system.

In another aspect, the present invention relates to a computer program product comprising instructions which, when the program is executed by a computer, cause the computer to carry out the method as previously described.

Accordingly, any method feature may also apply to the computer program product.

In another aspect, the present invention relates to a computer-readable medium comprising instructions which, when the program is executed by a computer, cause the computer to carry out the method as previously described.

Accordingly, any method feature may also apply to the computer-readable medium.

Further advantages, aspects and details of the invention are subject to the claims, the following description of exemplary embodiments applying the principles of the invention, and the respective exemplary drawings.
**Figure 1** is a schematic illustration of an air dryer system and a compressor according to an exemplary embodiment the present invention is applicable to; and
**Figure 2** is an exemplary graph of a temperature history over time.

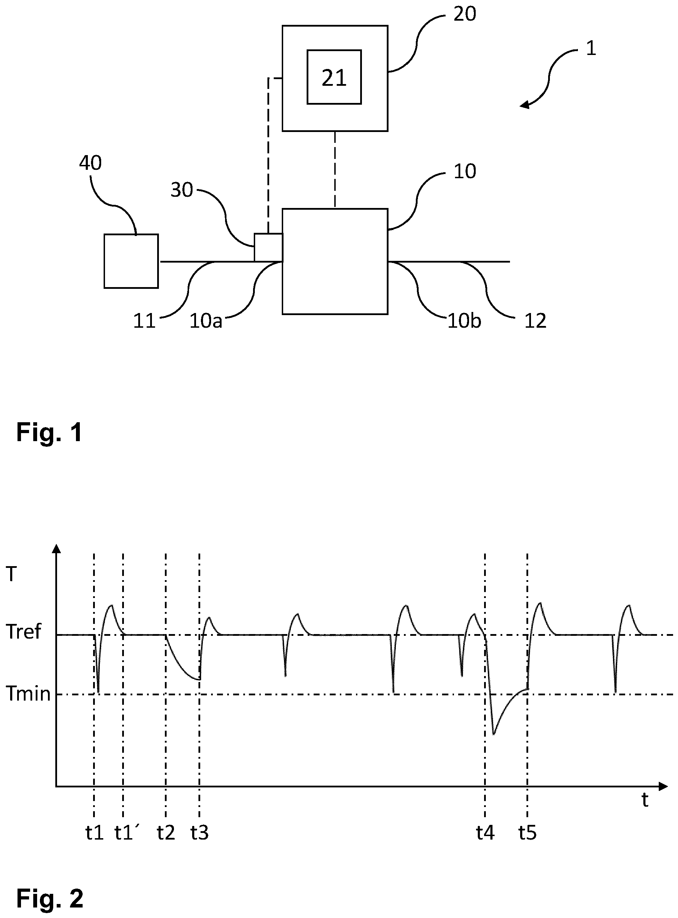

**Figure 1** shows a schematic illustration of an air dryer system 1 and a compressor 40 according to an exemplary embodiment the present invention is applicable to. The air dryer system 1 comprises an air dryer 10 and a control unit 20. The air dryer 10 comprises an air dryer inlet 10a connected to the compressor 40 via an air dryer inlet line 11 to be supplied with compressed air by the compressor 40. Further, the air dryer 10 comprises an air dryer outlet 10b to supply the received compressed air after passing of the air dryer 10 to respective consumer units or a circulation circuit or the like via an air dryer outlet line 12. The air dryer system 1 further comprises a temperature detection device 30 at the air dryer inlet to detect a temperature at the air dryer inlet.

The temperature detection device 30 provide a respective temperature signal to the control unit 20 to be controlled with a respective temperature and/or temperature profile stored in a memory 21 of the control unit 20 to control the air dryer 10 as described below.

**Figure 2** shows an exemplary graph of a temperature history at the air dryer inlet 10a detected by the temperature detection device over time to explain an embodiment of controlling the air dryer 10. When the compressor 40 is running, e.g. turned on, the temperature is substantially constant within a range of slight deviations. Such substantially constant temperature is set as reference temperature Tref. Further, when the air dryer 10 is turned on at a time t1, the temperature drops sharply to a minimum temperature to be set as predetermined temperature threshold Tmin, and subsequently rises above the reference temperature Tref before it decreases again to the reference temperature Tref at a time t1'. The temperature profile pattern from the time t1 to t1' is representative of a reference temperature profile pattern to be associated with the air dryer 10 being turned on. The temperature profile pattern from the time t1 to t1' is based on switching on a piston valve in the air dryer 10.

At a time t2, the compressor40 is turned off in a state of a dominant air dryer 10. A dominant state of the air dryer 10 is a state of the piston valve of the air dryer 10, in which the piston valve is activated by a spring. In the energized state of the air dryer 10, the piston valve is energized, i.e. activated by air. In such event, the temperature decreases with a slope less than the slope of the initial temperature drop due to turning on the air dryer 10. Accordingly, turning off of the compressor 40 is identified by the decrease in temperature starting from the reference temperature Tref detected by the temperature detection device 30 and evaluated be the control device to show a slope or respective shape deviating from the reference temperature profile pattern. Accordingly, when the control unit 20 determines that the compressor 40 has been turned off, the control unit 20 controls the air dryer 10 to be turned off within a predetermined deactivation time, here, immediately.

At a time t3, the compressor 40 is turned on again, resulting in a temperature increase. By a respective detection of the temperature decrease, the control unit 20 controls the air dryer 10 to be turned on within a predetermined activation time, here, immediately.

At a time t4, the compressor 40 is turned off in a state of the air dryer 10 being energized but not dominant, i.e. the temperature has not yet returned to be substantially constant. However, the reference temperature Tref has been nearly reached. With the compressor 40 being turned off in such state of the air dryer 10, the temperature drops below the predetermined temperature threshold Tmin indicating that the compressor 40 has been turned off. This is further indicated by a subsequent degressive increase in temperature. Accordingly, the control unit 20 controls the air dryer 10 to be turned off within the predetermined deactivation time. In the exemplary embodiment the predetermined deactivation time is the same for the compressor being turned off in the dominant state and in the energized state of the air dryer. However, in alternative embodiments, the predetermined deactivation time may be predetermined differently for each of the different states of the air dryer 10.

At a time t5, the compressor 40 is turned on again. In response to the activation of the compressor 40, the temperature further increases with a slope different from the slope after the initial drop in temperature. The respective change in the temperature profile pattern is detectable and the control unit 20 controls the air dryer 10 to be turned on within the predetermined activation time. Similar as with respect to the predetermined deactivation time, the predetermined activation time may be adapted for different states in which the compressor 40 and/or the air dryer 10 are/is operated.

The invention has been described with respect to exemplary embodiments. However, the invention is not limited to the exemplary embodiments.

### LIST OF REFERENCE SIGNS

- 1: air dryer system
- 10: air dryer
- 10a: air dryer inlet
- 10b: air dryer outlet
- 11: air dryer inlet line
- 12: air dryer outlet line
- 20: control unit
- 21: memory
- 30: temperature detection device
- 40: compressor
- t1: air dryer turned on
- t1': Tref
- t2: compressor turned off on dominant air dryer
- t3: compressor turned on
- t4: compressor turned off on energized air dryer
- t5: compressor turned on
- Tmin: predetermined temperature threshold
- Tref: reference temperature

## Claims

1. Air dryer system (1) for a compressor (40), comprising:
at least one air dryer (10) having at least one air dryer inlet (10a) configured to receive air compressed by the compressor (40) via an air dryer inlet line (11) and at least one air dryer outlet (10b) configured to discharge air from the air dryer (10) via an air dryer inlet line (11),
at least one temperature detection device (30) positioned at the at least one air dryer inlet (10a) to detect a temperature at the air dryer inlet (10a), and
a control unit (20) operationally connected to the at least one air dryer (10) and the at least one temperature detection device (30) and configured to control the at least one air dryer (10) to be turned on or off within a predetermined activation or deactivation time at least in accordance with a temperature and/or temperature profile detected by the at least one temperature detection device (30).

2. Air dryer system (1) according to claim 1, wherein the control unit (20) is configured to control the air dryer (10) to be turned on or off within the predetermined activation or deactivation time, when the temperature and/or temperature profile detected by the at least one temperature detection device (30) indicates an deactivation and/or activation of the compressor (40).

3. Air dryer system (1) according to claim 1 or 2, wherein the control unit (20) is configured to control the air dryer (10) to be turned off within the predetermined deactivation time, when the temperature detected by the at least one temperature detection device (30) decreases from a substantially constant level over a predetermined drop time (t2-t3) and/or from a reference temperature (Tref) over a predetermined drop time (t2-t3) and/or below a predetermined temperature threshold (Tmin).

4. Air dryer system (1) according to any one of the preceding claims, wherein the control unit (20) is configured to control the air dryer (10) to be turned on within the predetermined activation time, when the temperature detected by the at least one temperature detection device (30) shows a temperature increase after the temperature detected by the at least one temperature detection device (30) has decreased from a substantially constant level over a predetermined drop time (t2-t3) and/or from a reference temperature (Tref) over a predetermined drop time (t2-t3) and/or below a predetermined temperature threshold (Tmin).

5. Air dryer system according to any one of the preceding claims, wherein the control unit (20) is configured to control the air dryer (10) to be turned off within the predetermined deactivation time, when a shape of an actual temperature profile pattern different from a substantially constant temperature deviates from a shape of a reference temperature profile pattern (t1-t1 ') different from a substantially constant temperature.

6. Air dryer system (1) according to anyone of the preceding claims, wherein the control unit (20) comprises a memory (21), in which at least one of the predetermined activation time, the predetermined deactivation time, the predetermined drop time, the reference temperature (Tref) and the predetermined temperature threshold (Tmin) is stored.

7. Compressor system, comprising:
at least one compressor (40), and
at least one air dryer system (1) according to any one of the preceding claims.

8. Rail vehicle, comprising at least one compressor system according to claim 7.

9. Method for operating an air dryer system (1) according to any one of the claims 1 to 6, wherein the method comprises:
detecting a temperature at the at least one air dryer inlet (10a), and
controlling the at least one air dryer (10) to be turned on or off within a predetermined activation or deactivation time at least in accordance with the temperature and/or a respective temperature profile detected.

10. Computer program product comprising instructions which, when the program is executed by a computer, cause the computer to carry out the method according to claim 9.

11. Computer-readable medium comprising instructions which, when the program is executed by a computer, cause the computer to carry out the method according to claim 9.
